# EUROPÄISCHE PATENTSCHRIFT

(11) **EP 1 912 031 B1**
(45) Veröffentlichungstag und Bekanntmachung des Hinweises auf die Patenterteilung: **05.08.2020**
(21) Anmeldenummer: 07019602.7
(22) Anmeldetag: 06.10.2007
(51) Int. Cl.: B60H 1/00, B60H 1/32, F02B 63/04, F25B 27/00, F25B 49/02, F25D 11/00, F25D 29/00

(54) **Kühlsystem**
Cooling system
Système de refroidissement

(30) Priorität: 09.10.2006 DE 102006048821
(43) Veröffentlichungstag der Anmeldung: 16.04.2008
(73) Patentinhaber: BITZER Kühlmaschinenbau GmbH, 71065 Sindelfingen (DE)
(72) Erfinder: Sandkötter, Wolfgang, 71083 Herrenberg (DE)
(74) Vertreter: Hoeger, Stellrecht & Partner Patentanwälte mbB

(56) Entgegenhaltungen:
- EP-A1- 1 046 873
- EP-A1- 1 512 565
- EP-A1- 1 591 285
- DE-A1- 3 843 673
- DE-B- 1 232 170
- JP-A- 2005 061 697
- US-A- 2 786 334
- US-A- 3 283 525

## Beschreibung

Die Erfindung betrifft ein Kühlsystem, insbesondere für die Transportkühlung bei transportablen Containern oder Kühlzellen von Land-, Luft- oder Wasserfahrzeugen, umfassend einen Kältekreis, in welchem ein Kältemittelverdichter, ein hochdruckseitiger Wärmetauscher, eine Expansionseinheit und ein niederdruckseitiger Wärmetauscher angeordnet sind, einen elektrischen Verdichtermotor zum Antreiben des Kältemittelverdichters und eine Steuereinheit zur Steuerung einer Kälteleistung des Kältekreises.

Bei den bekannten Kühlsystemen wird der Verdichtermotor entweder selbst unmittelbar als Verbrennungsmotor ausgeführt oder dann, wenn er als Elektromotor ausgeführt ist, durch ein Bordnetz des Land-, Luft- oder Wasserfahrzeug gespeist. Diese bekannten Lösungen sind nicht energiesparend.

In den Dokumenten EP1512565, EP3283525, JP2005061697, US2786334, EP1046873 und DE1232170 sind solche Kühlsysteme offenbart. In den Dokumenten DE3843673 und EP1591285 sind Kühlsysteme von transportablen Kühleinheiten offenbart, die einen zweiten Verbrennungsmotor und einen Generator für die Einspeisung eines internen elektrischen Netzes des Kühlsystems mit elektrischer Spannung aufweisen, wobei der zweite Verbrennungsmotor und der Generator unabhängig vom Fahrzeugantrieb bereitgestellt sind.

Der Erfindung liegt daher die Aufgabe zugrunde, ein Kühlsystem der gattungsgemäßen Art derart zu verbessern, dass dieses möglichst energiesparend arbeitet.

Die vorliegende Erfindung ist im unabhängigen Anspruch 1 offenbart. Weitere Ausführungsbeispiele sind in den abhängigen Ansprüchen offenbart. Der erfindungsgemäßen Lösung schafft die Möglichkeit, das Kühlsystem individuell entsprechend den jeweiligen Gegebenheiten möglichst energiesparend zu betreiben.

Erfindungsgemäß ist es dabei eine Steuereinheit vorgesehen, welche über einen Motorregler eine Drehzahl des Verbrennungsmotors steuert. Diese Lösung hat den Vorteil, dass damit in besonders einfacher Weise Energiesparpotential zur Verfügung steht, da der Verbrennungsmotor nur mit der Drehzahl betrieben wird, die erforderlich ist, um die erforderliche elektrische Leistung für den Betrieb des Kühlsystems, insbesondere die erforderliche elektrische Leistung für den Betrieb des Kältemittelverdichters oder gegebenenfalls noch von Gebläseeinheiten, in das interne elektrische Netz einzuspeisen.

Dabei wäre es grundsätzlich denkbar, das interne elektrische Netz als Gleichstromnetz zu betreiben und den Generator für die Abgabe höherer Leistung mit höherer Drehzahl anzutreiben.

Besonders günstig ist es jedoch, wenn der Generator ein Drehstromgenerator ist.

Ferner ist es vorteilhaft, wenn das interne elektrische Netz ein Drehstromnetz ist.

Schließlich ist es vorteilhaft, wenn der Verdichtermotor ein Drehstrommotor ist.

Prinzipiell wäre es denkbar, den Verdichtermotor bei einer bestimmten Drehzahl oder zwei bestimmten Drehzahlen laufen zu lassen, und die diesem entsprechende elektrische Leistung in das interne elektrische Netz einzuspeisen.

In einem derartigen Fall wäre es dann günstig, wenn der Verdichtermotor mit einem Umrichter versehen ist, so dass die Drehzahl des Verdichtermotors und somit die Kälteleistung des Kältekreises der tatsächlich benötigten Kälteleistung stufenlos angepasst wird, wobei diese stufenlose Anpassung ein technisches Merkmal der vorliegenden Anmeldung darstellt.

Eine besonders günstige Ausführungsform der erfindungsgemäßen Lösung sieht vor, dass der Generator und der Verdichtermotor zumindest innerhalb eines ausgewählten Kälteleistungsbereichs drehzahlproportional zueinander betreibbar sind.

Das heißt, dass innerhalb des ausgewählten Kälteleistungsbereichs eine Proportionalität zwischen der Drehzahl des Generators und denen des Verdichtermotors besteht, so dass sich über eine Drehzahlregelung des Verdichtermotors auch eine Drehzahlregelung des Generators erreichen lässt. Die Drehzahlproportionalität kann eine strikte Drehzahlproportionalität sein, im Fall, dass der Verdichtermotor jedoch ein Asynchronmotor ist, kann die Proportionalität von einem strikten Proportionalitätsverhältnis abweichen, da der Asynchronmotor einen gewissen Schlupf aufweist. Aus diesem Grund ist der Begriff "Drehzahlproportional" im Sinne der vorliegenden Erfindung nicht als exakter Proportionalitätswert zu interpretieren, sondern als ungefährer Proportionalitätswert.

Die Drehzahlproportionalität kann auf verschiedenste Art und Weise erreicht werden.

Eine besonders einfache Lösung zur Erreichung einer Drehzahlproportionalität sieht vor, dass der Generator und der Verdichtermotor zumindest innerhalb des Kälteleistungsbereichs miteinander frequenzproportional gekoppelt betreibbar sind.

Sowohl bei der Drehzahlproportionalität als auch bei der Frequenzproportionalität ist es im Rahmen der erfindungsgemäßen Lösung denkbar, einen festen Proportionalitätsfaktor vorzusehen, es ist aber auch denkbar, beispielsweise für unterschiedliche Kälteleistungsbereiche unterschiedliche Proportionalitätsfaktoren vorzusehen.

Damit besteht beispielsweise die Möglichkeit, den Bereich, in dem der den Generator treibende Verbrennungsmotor optimal betreibbar ist und den Bereich, der für den Verdichtermotor optimal wäre, nicht identisch zu wählen, so dass der Drehzahlbereich, in dem der Verbrennungsmotor und somit die Drehzahl des Generators über die Drehzahl des Verbrennungsmotors günstig regelbar ist, durch Vorsehen verschiedener Proportionalitätsfaktoren zur Drehzahl- oder Frequenzeinstellung des Verdichtermotors in verschiedenen Kälteleistungsbereichen eingesetzt werden kann.

Im einfachsten Fall ist jedoch vorgesehen, dass der Generator und der Verdichtermotor mit derselben Frequenz laufen, so dass die Drehzahl, mit welcher der Generator angetrieben wird, im Wesentlichen der Drehzahl entspricht, mit welcher der Verdichtermotor läuft.

Eine konstruktiv besonders günstige Lösung sieht dabei vor, dass der Generator ein mehrpoliger Generator ist und dass der Verdichtermotor eine der Frequenzproportionalität entsprechende Polzahl aufweist.

So ist es beispielsweise denkbar, den Generator so auszubilden, dass dieser die halbe Polzahl des Verdichtermotors aufweist, so dass in diesem Fall dann der Verdichtermotor mit der halben Drehzahl des Generators laufen würde.

Es ist aber auch denkbar, sowohl dem Generator als auch dem Verdichtermotor dieselbe Polzahl zu geben, so dass dann beide ohne dass weitere Maßnahmen ergriffen werden, im Wesentlichen frequenzproportional zueinander betreibbar sind.

Eine besonders günstige Steuerung des erfindungsgemäßen Kühlsystems ist dann möglich, wenn die Steuereinheit zumindest innerhalb eines ausgewählten Kälteleistungsbereichs zur Steuerung der Kälteleistung des Kältekreises die Drehzahl des Verbrennungsmotors steuert.

Erfindungsgemäß ist es vorgesehen, um die Kälteleistung möglichst exakt in dem Kälteleistungsbereich steuern zu können, dass mit der Steuereinheit durch stufenlose Steuerung der Drehzahl des Verbrennungsmotors die Kälteleistung im Wesentlichen stufenlos steuerbar ist.

Hinsichtlich eines vorteilhaften Betriebs des erfindungsgemäßen Kühlsystems ist es ferner günstig, wenn das Kühlsystem eine von dem internen elektrischen Netz gespeiste Gebläseeinheit für den hochdruckseitigen Wärmetauscher aufweist.

Diese Gebläseeinheit kann insbesondere dann, wenn das interne Netz als Drehstromnetz ausgelegt ist, abhängig von der Frequenz im Drehstromnetz sein.

Aus diesem Grund ist es zur Netzfrequenz unabhängigen Steuerung der Gebläseeinheit günstig, wenn die Gebläseeinheit über eine Umsetzereinheit betreibbar ist.

Ferner ist vorzugsweise vorgesehen, dass das Kühlsystem eine von dem internen elektrischen Netz gespeiste Gebläseeinheit für den niederdruckseitigen Wärmetauscher aufweist.

Um auch diese Gebläseeinheit unabhängig von der Frequenz des Netzes und somit je nach geforderter Luft- oder Gasmenge betreiben zu können, ist vorzugsweise vorgesehen, dass die Gebläseeinheit über eine Umsetzereinheit gespeist ist.

Die Umsetzereinheiten können dabei Inverter oder auch Polumschalteinheiten sein.

Darüber hinaus sieht eine vorteilhafte Ausbildung des erfindungsgemäßen Kühlsystems vor, dass das interne elektrische Netz mit einer Einspeiseeinheit zur Zufuhr von elektrischer Leistung aus einem externen Versorgungsnetz versehen ist.

Ein derartiges externes Versorgungsnetz könnte beispielsweise noch aus Sicherheitsgründen das Versorgungsnetz für Land-, Luft- und Wasserfahrzeuge sein.

Üblicherweise ist aber ein derartiges externes Versorgungsnetz ein stationäres, beispielsweise mit einer Immobilie verbundenes oder öffentlich zugängliches Versorgungsnetz, wie beispielsweise ein kommunales Versorgungsnetz.

Insbesondere ist vorgesehen, dass die Einspeiseeinheit die Frequenz des externen Versorgungsnetzes auf eine vorgebbare Frequenz des internen elektrischen Netzes umsetzt.

Die Einspeiseeinheit kann im einfachsten Fall so ausgelegt sein, dass diese unmittelbar mit der Netzfrequenz des externen Versorgungsnetzes arbeitet und somit das interne elektrische Versorgungsnetz ebenfalls mit dieser Frequenz betreibt, da die elektrische Leistung mit dieser Frequenz eingespeist wird.

Es ist aber auch denkbar, insbesondere dann wenn der Verdichtermotor bei einer anderen Frequenz laufen soll, dass die vorgebbare Frequenz des internen elektrischen Netzes von der des externen Versorgungsnetzes abweicht. In diesem Fall ist dann zwischen dem externen Versorgungsnetz und dem internen elektrischen Netz ein Umrichter vorzusehen.

Hinsichtlich der Ausbildung des Verdichtermotors und des von diesem getriebenen Kältemittelverdichter sind die unterschiedlichsten Lösungen denkbar. Eine Lösung sieht vor, dass diese - beispielsweise über eine Kupplung - voneinander trennbar sind.

Aus Gründen der Einfachheit des Aufbaus ist es jedoch vorteilhaft, wenn der Verdichtermotor und der Kältemittelverdichter direkt mechanisch starr gekoppelt sind.

Eine derartige direkte mechanisch starre Kopplung kann beispielsweise über ein zwischengeschaltetes Getriebe erfolgen.

Konstruktiv noch einfacher ist jedoch eine Lösung, bei welcher der Verdichtermotor und der Kältemittelverdichter eine gemeinsame durchgehende Welle aufweisen, die einerseits vom Verdichtermotor angetrieben wird und andererseits im Kältemittelverdichter, beispielsweise wenn dieser als Kolbenverdichter ausgebildet ist, die Exzenter für den Antrieb der Kolben oder wenn dieser als Scroll- oder Spiralverdichter ausgebildet ist, direkt die orbitierende Spirale antreibt.

Um Kältemittelverluste zu minimieren ist es ferner besonders günstig, wenn der Verdichtermotor und der Kältemittelverdichter in einem gemeinsamen, hermetisch geschlossenen Gehäuse angeordnet sind.

Diese Lösung hat den großen Vorteil, dass damit eine Vielzahl von Abdichtungsproblemen auf Seiten des Kältemittelverdichters und insbesondere im Bereich der Antriebswelle des Kältemittelverdichters vermieden werden können.

Unter einem hermetisch geschlossenen Gehäuse kann dabei sowohl ein Gehäuse verstanden werden, dass aus mehreren Teilen zusammengesetzt ist, die dicht miteinander verbunden sind, oder auch ein Gehäuse verstanden werden, das hermetisch dicht verschweißt ist.

Ferner wurden hinsichtlich des Verbrennungsmotors und des Generatormotors ebenfalls keine näheren Angaben gemacht.

Auch diese können beispielsweise über eine Kupplung voneinander trennbar und miteinander verbindbar sein.

Aus Gründen eines möglichst einfachen Aufbaus hat es sich ebenfalls als günstig erwiesen, wenn der Verbrennungsmotor und der Generator direkt mechanisch starr gekoppelt sind.

Unter einer derartigen mechanisch starren Kopplung ist ebenfalls beispielsweise eine Kopplung über ein zwischengeschaltetes Getriebe denkbar. Besonders einfach ist es jedoch, wenn der Verbrennungsmotor und der Generator eine durchgehende Welle aufweisen.

Ferner ist es hinsichtlich der Montage des Verbrennungsmotors und des Generators günstig, wenn diese eine zusammenhängende Motorgeneratoreinheit bilden.

Noch vorteilhafter ist es, wenn der Verbrennungsmotor und der Generator eine zusammenhängende Gehäuseeinheit aufweisen.

Erfindungsgemäß ist eine derartige Kühleinrichtung ausgebildet, wenn die Kühlzelle und das Kühlsystem eine zusammenhängende transportable Einheit bilden.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:

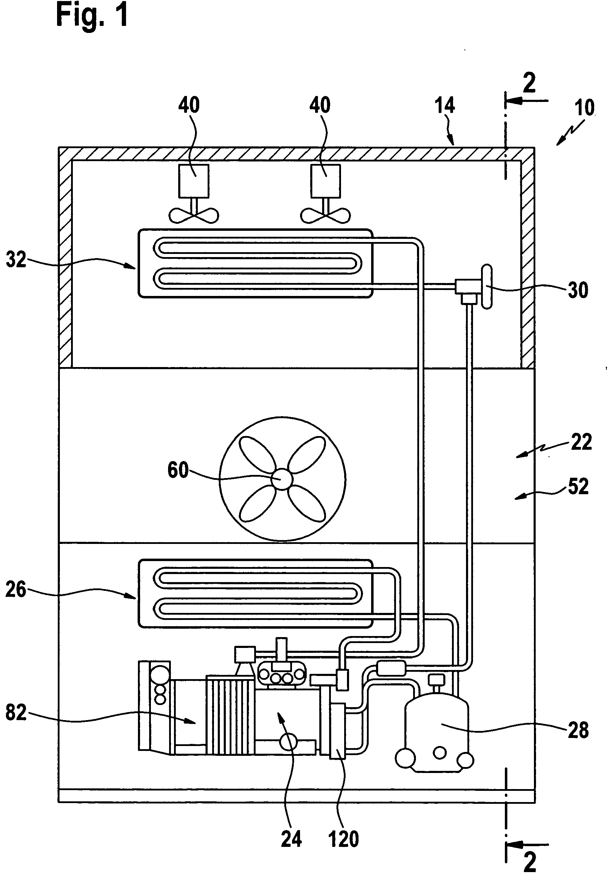

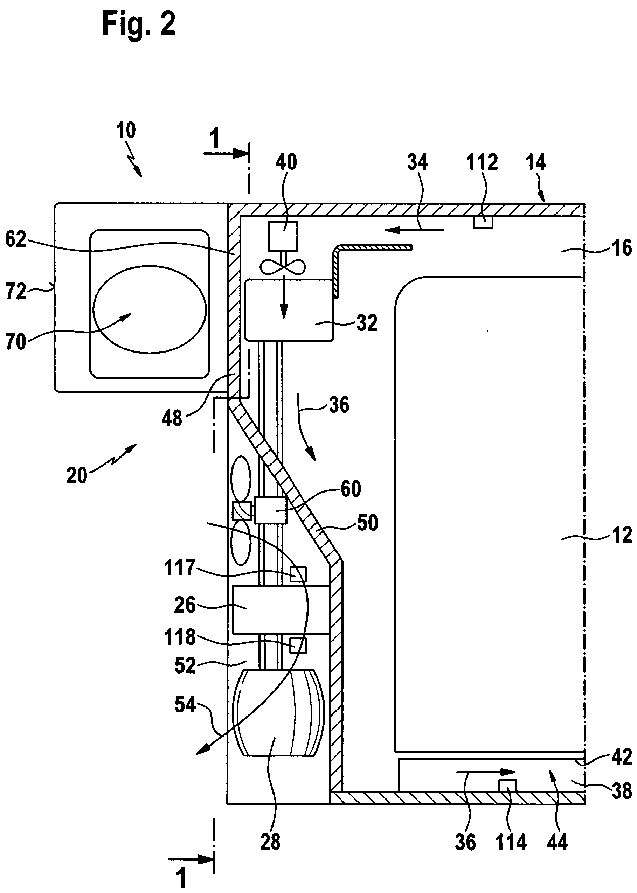

- Fig. 1: einen Schnitt längs Linie 1-1 in Fig. 2 durch einen Kühlcontainer mit einem ersten Ausführungsbeispiels eines erfindungsgemäßen Kühlsystems;
- Fig. 2: einen Schnitt längs Linie 2-2 in Fig. 1;
- Fig. 3: eine schematische Darstellung eines Antriebs eines Kältekreises des ersten Ausführungsbeispiels des erfindungsgemäßen Kühlsystems mit einem internen elektrischen Netz;
- Fig. 4: eine schematische Darstellung eines zweistufigen Kältemittelverdichters gemäß dem Ausführungsbeispiel des erfindungsgemäßen Kühlsystems und
- Fig. 5: eine schematische Darstellung entsprechend Fig. 3 eines zweiten Ausführungsbeispiels des erfindungsgemäßen Kühlsystems.

Ein als Ganzes mit 10 bezeichneter Kühlcontainer, der zum Transport von verderblicher Ware 12, wie zum Beispiel gefrorenen Fisch, gekühltem Fleisch, Früchten, Schokolade oder Schnittblumen vorgesehen ist, umfasst als Kühlzelle ein thermisch isoliertes Containergehäuse 14, in dem ein Transportvolumen 16 vorgesehen ist, dass durch ein als Ganzes mit 20 bezeichnetes erstes Ausführungsbeispiels eines Kühlsystems kühlbar ist.

Das Kühlsystem 20 umfasst einen als Ganzes mit 22 bezeichneten Kältekreis, in welchem ein Kältemittelverdichter 24 angeordnet ist, welcher Kältemittel auf Hochdruck verdichtet und einem hochdruckseitigen Wärmetauscher 26, beispielsweise einem Kondensator, zuführt, in welchem in üblicher Weise eine Kühlung des auf Hochdruck verdichteten Kältemittels erfolgt und vorzugsweise eine Erniedrigung der Enthalpie desselben. Bei üblichen Kältemitteln erfolgt eine Kondensation, so dass sich flüssiges Kältemittel in einem als Ganzes mit 28 bezeichneten Sammler sammelt.

Aus diesem Sammler 28 wird entweder direkt, oder über einen eventuell zuschaltbaren Economizer flüssiges Kältemittel entnommen und einer Expansionseinheit 30 zugeführt, die das auf Hochdruck verdichtete flüssige Kältemittel expandieren und dann in einen niederdruckseitigen Wärmetauscher 32, beispielsweise auch als Verdampfer bezeichnet, eintreten lässt.

Das im niederdruckseitigen Wärmetauscher 32 wieder aufgewärmte Kältemittel wird dann wieder von dem Kältemittelverdichter 24 angesaugt und in der beschriebenen Art und Weise verdichtet.

Der niederdruckseitige Wärmetauscher 32 ist nun in der Lage, einen Luft- oder Gasstrom 34 zu kühlen, welcher durch eine Gebläseeinheit 40 aus dem Transportvolumen 16 abgesaugt und durch den niederdruckseitigen Wärmetauscher 32 hindurchgeblasen wird, so dass ein gekühlter Luft- oder Gasstrom 36 den niederdruckseitigen Wärmetauscher 32 verlässt und beispielsweise über einen bodenseitigen Kühlkanal 38 in das Transportvolumen zurückgeführt und in diesem verteilt wird.

Beispielsweise kann der bodenseitige Kühlkanal 38 durch T-Träger 42 gebildet sein, die eine Bodengruppe 44 des Containergehäuses 14 bilden.

Zur geeigneten Anordnung des hochdruckseitigen Wärmetauschers 26 und des Kältemittelverdichters 24 in dem Containergehäuse 14, ist eine Frontwand 48 des Containergehäuses 14 mit einem zurückgesetzten Wandbereich 50 versehen, so dass frontseitig des Wandbereichs 50 ein Raum 52 zur Aufnahme des hochdruckseitigen Wärmetauschers 26 und des Kältemittelverdichters 24 entsteht.

Der Raum 52 wird von einem Kühlluftstrom 54 durchströmt, der mittels einer Gebläseeinheit 60 erzeugt und auf den hochdruckseitigen Wärmetauscher 26 gerichtet ist, so dass dieser den hochdruckseitigen Wärmetauscher 26 durchströmt, um das auf Hochdruck verdichtete Kältemittel zu kühlen.

An dem Containergehäuse 14 ist außerdem, vorzugsweise an einem oberen Wandbereich 62 der Frontwand 48 noch eine Motor-Generatoreinheit 70 gehalten, welche in einem Motor-Generatorgehäuse 72 angeordnet ist.

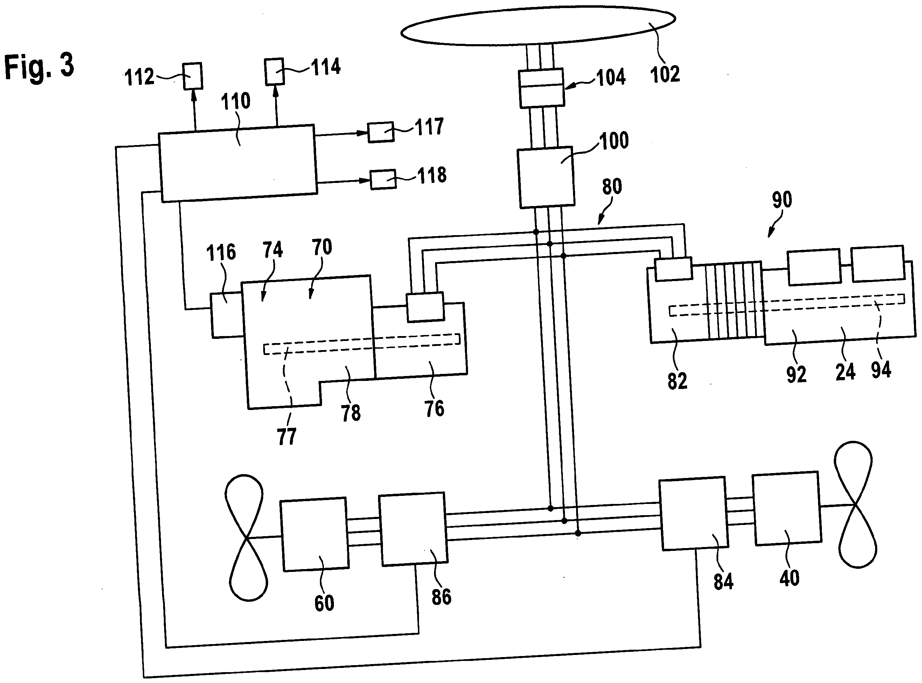

Wie in Fig. 3 dargestellt, umfasst die Motor-Generatoreinheit 70 einen Verbrennungsmotor 74, vorzugsweise einen Dieselmotor, der einen mit diesem gekoppelten elektrischen Generator 76 antreibt.

Vorzugsweise sind der Verbrennungsmotor 74 und der elektrische Generator 76 unmittelbar aneinander angeflanscht und mittels einer durchgehenden Welle mechanisch starr miteinander gekoppelt und bilden somit eine in einem gemeinsamen Gehäuseblock 78 vorgesehene Einheit.

Der durch den Verbrennungsmotor 74 angetriebene elektrische Generator 76 speist ein internes elektrisches Netz 80 mit elektrischer Leistung, wobei an dem internen elektrischen Netz 80 unter anderem ein elektrischer Verdichtermotor 82 angeschlossen ist, der den Kältemittelverdichter 24 antreibt und unmittelbar mit diesem zu einer Motor-Verdichtereinheit 90 verbunden ist.

Insbesondere sind der Verdichtermotor 82 und der Kältemittelverdichter 24 mechanisch starr miteinander gekoppelt, beispielsweise durch eine durchgehende Welle 94 und weisen ein gemeinsames hermetisch geschlossenes Gehäuse 92 auf.

Ferner ist an das interne elektrische Netz 80 auch die Gebläseeinheit 40 angeschlossen, und zwar über eine Umsetzereinheit 84.

Außerdem ist auch die Gebläseeinheit 60 über eine Umsetzereinheit 86 an das interne elektrische Netz 80 angeschlossen.

Die Umsetzeinheiten 84 und 86 können dabei als steuerbare Inverter ausgebildet sein oder als steuerbare Polumschaltungen, so dass sich die Drehzahl oder Frequenz mit der die Gebläseeinheiten 40, 60 betrieben werden unabhängig von der Frequenz des internen elektrischen Netzes 80 einstellen lässt.

Ferner ist, insbesondere zum Betreiben des Kühlsystems 20 an einem Stand- oder Lagerplatz an das interne elektrische Netz 80 eine Einspeiseeinheit 100 angeschlossen, die es ermöglicht, aus einem externen Versorgungsnetz 102, beispielsweise einem stationären Versorgungsnetz, wie es in Immobilien vorhanden ist und beispielsweise auch ein öffentliches Versorgungsnetz sein kann, elektrische Leistung dem internen elektrischen Netz 80 zuzuführen, wobei der Anschluss der Einspeiseeinheit 100 über eine Steckverbindung 104 mit einem derartigen externen stationären Versorgungsnetz 102 erfolgt, und zwar immer dann, wenn der Container oder Transportaufbau sich nicht auf dem Transport befindet, sondern stationär, beispielsweise auf einem Parkplatz oder in einer Lagereinrichtung verbleibt.

Zur Steuerung der von dem Kältekreis 22 am niederdruckseitigen Wärmetauscher 32 abgegebenen Kälteleistung ist eine als Ganzes mit 110 bezeichnete Steuereinheit vorgesehen, die beispielsweise über Temperatursensoren 112, die von den aus dem Transportvolumen 16 angesaugten

Luft- oder Gasstrom 34 umströmt sind, und über Temperatursensoren 114, die von dem gekühlten Luft- oder Gasstrom 36 umströmt sind, die Temperaturverhältnisse in dem Transportvolumen 16 ermittelt und mit beispielsweise vorab eingespeicherten Sollwerten für die Temperatur vergleicht.

Ausgehend von diesem Vergleich der Temperaturen mit Sollwerten werden Steuersignale für das erfindungsgemäße Kühlsystem generiert.

Dabei ist eine wesentliche Steuergröße für die erhältliche Kälteleistung am Wärmetauscher 32 die Drehzahl, mit der der Kältemittelverdichter 24 durch den elektrischen Verdichtermotor 82 angetrieben wird.

Seitens der Steuereinheit 110 erfolgt nun beim ersten Ausführungsbeispiel zumindest in einem ausgewählten Kälteleitungsbereich keine direkte Drehzahlsteuerung des elektrischen Verdichtermotors 82, sondern es erfolgt über eine Steuereinheit 116, beispielsweise im Fall eines Dieselmotors eine Einspritzsteuerung, eine Drehzahlsteuerung des Verbrennungsmotors 74 und somit auch eine Drehzahlsteuerung des elektrischen Generators 76, der somit die elektrische Leistung aufgrund seiner Drehzahlabhängigkeit mit unterschiedlichen Frequenzen zur Verfügung stellt.

Beispielsweise wird der elektrische Generator 76 mit Drehzahlen zwischen ungefähr 1000 U/min und ungefähr 3600 U/min betrieben.

Ferner ist der Generator 76 so aufgebaut, dass er dann, wenn er mit ungefähr 1000 U/min betrieben wird, die elektrische Leistung mit einer Frequenz von ungefähr 33 Hz und dann, wenn er mit ungefähr 3600 U/min betrieben wird, die elektrische Leistung mit einer Frequenz von ungefähr 120 Hz in das interne elektrische Netz 80 einspeist.

Somit liegt beispielsweise die Frequenz, mit der die elektrische Leistung von dem elektrischen Generator 76 in das interne elektrische Netz 80 eingespeist wird, im Bereich von ungefähr 33 Hz bis ungefähr 120 Hz.

Das interne elektrische Netz 80 ist somit durch den drehzahlvariabel betriebenen elektrischen Generator 76 frequenzvariabel gespeist und somit auch frequenzvariabel betrieben.

Entsprechend ist auch der Verdichtermotor 83 frequenzvariabel gespeist und läuft mit einer der Frequenz des internen elektrischen Netzes 80 proportionalen Drehzahl.

Im einfachsten Fall ist der elektrische Generator 76 so aufgebaut, dass dessen Polzahl der Polzahl des Verdichtermotors 82 entspricht und somit - abgesehen von Schlupf im Fall eines Asynchronmotors - die Drehzahl des Verdichtermotors im Wesentlichen der Drehzahl des Generators 76 entspricht.

Im Gegensatz zu den bekannten Kühlsystemen erfolgt somit bei dem erfindungsgemäßen Kühlsystem 20 in dem ausgewählten Kälteleistungsbereich keine elektrische Regelung der Drehzahl des Verdichtermotors 82, sondern die Drehzahlregelung des Verdichtermotors 82 erfolgt letztlich über die Drehzahlregelung des Verbrennungsmotors 74.

Um noch die Möglichkeit zu haben, die Gebläseeinheiten 40 und 60 durch das interne elektrische Netz 80 unabhängig von der Drehzahl des Generators 76 und der Drehzahl des Verdichtermotors 82 betreiben zu können, sind die Umsetzereinheiten 84 und 86 vorgesehen, die es erlauben, abweichend von der Frequenz des internen elektrischen Netzes 80 die Gebläseeinheiten 40 und 60 mit den jeweils für die Umwälzung des Luft- oder Gasstroms 34, 36 sowie die Umwälzung des Kühlluftstroms 54 erforderlichen Drehzahlen zu betreiben.

Die Steuerung der Drehzahl der Gebläseeinheiten 40 und 60 erfolgt dabei ebenfalls über die Steuereinheit 110, welche die steuerbaren Umsetzereinheiten 84 und 86 mit entsprechenden Steuersignalen versorgt.

Hierzu erfasst die Steuereinheit 110 vorzugsweise noch zusätzlich über Sensoren 117 und 118 die Temperaturen der Luftströmung 54 vor Eintritt in den hochdruckseitigen Wärmetauscher 26 und nach Verlassen des hochdruckseitigen Wärmetauschers 26.

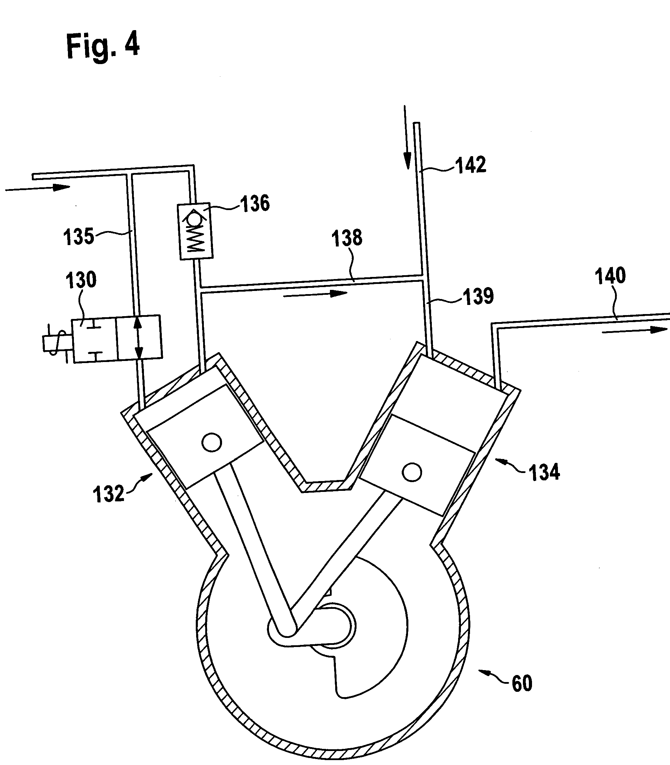

Die Steuerung der Kälteleistung erfolgt jedoch nicht nur ausschließlich über die Steuerung der Drehzahl des Verdichtermotors 82, sondern auch dadurch, dass die Steuereinheit 110 an sich eine bekannte Economizerstufe 120 zu- oder abschaltet oder aber auch zusätzlich über die Ansteuerung eines Schaltventils 130 eine erste von zwei Verdichterstufen 132 und 134 des Kältemittelverdichters 24 zu- oder abschaltet, wie in Fig. 4 dargestellt.

Durch das Schaltventil 130 ist eine Ansaugleitung 135 der ersten Verdichterstufe 132 blockierbar und über ein Rückschlagventil 136 sowie eine Bypass-Leitung 138 wird das an sich zur ersten Verdichterstufe 132 strömende Kältemittel dann direkt von der Ansaugleitung 139 der zweiten Verdichterstufe 134 angesaugt, die dann über eine Hochdruckleitung 140 das verdichtete Kältemittel zum hochdruckseitigen Wärmetauscher 32 fördert. Ferner führt zur Ansaugleitung 139 der zweiten Verdichterstufe 134 auch eine Ansaugleitung 142 des Economizers 120, so dass das durch diesen durchströmende Kältemittel unabhängig davons, ob beide Verdichterstufen 132 und 134 arbeiten oder nur eine der Verdichterstufen, nämlich die zweite Verdichterstufe 134, arbeitet, stets nur von der zweiten Verdichterstufe 134 angesaugt wird.

Ein derartiger Betrieb eines mehrstufigen Kältemittelverdichters 24 in unterschiedlichen Betriebsmodi und für unterschiedliche erforderliche Kälteleistungen ist beispielsweise im Detail in der WO 02/090844 A1 beschrieben, auf welche hinsichtlich des optimierten Betriebs des Kältemittelverdichters 24 in den unterschiedlichsten Betriebszuständen voll inhaltlich Bezug genommen wird.

Allerdings wird im Gegensatz zur Lösung gemäß der WO 02/090844 A1 die Drehzahl des Verdichtermotors 82 in einem variabel steuerbaren Kälteleistungsbereich stufenlos in der beschriebenen Art und Weise von der Steuereinheit 110 gesteuert.

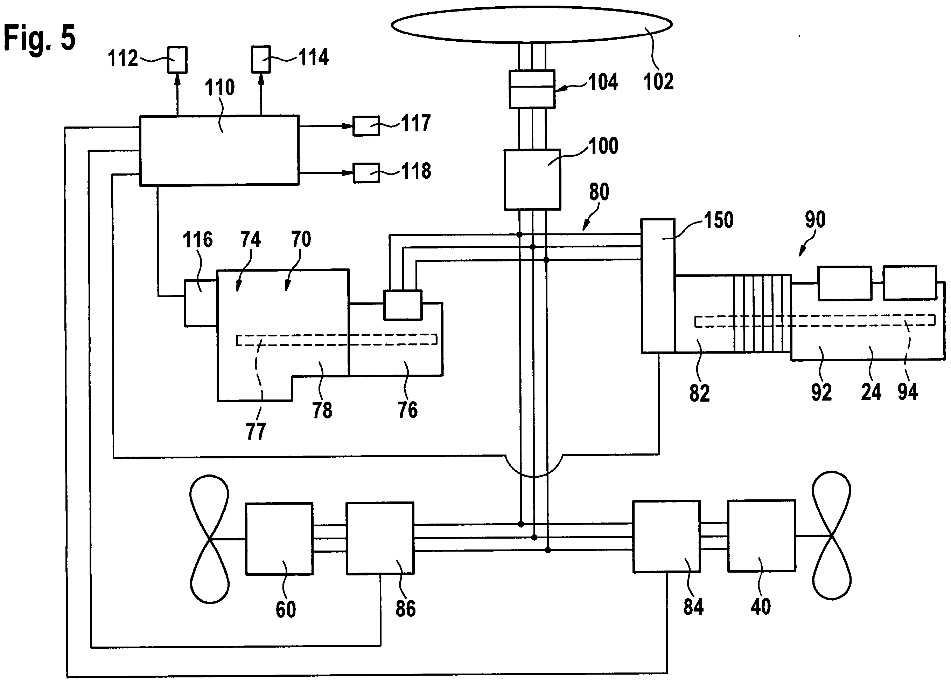

Da jedoch der steuerbare Drehzahlbereich des Verbrennungsmotors 74 geringer ist, als der Drehzahlbereich, in welchem vorzugsweise der Kältemittelverdichter 24 zur Steuerung der Kälteleistung betrieben werden könnte, ist bei einem zweiten Ausführungsbeispiel eines erfindungsgemäßen Kühlsystems 20, dargestellt in Fig. 5, die Möglichkeit vorgesehen, den Verdichtermotor 82 noch zusätzlich über einen Umrichter 150 über das interne elektrische Netz 80 zu speisen.

Damit sind bei einem frequenzproportionalen Betrieb des Verdichtermotors 82 und des Generators 76 unterschiedliche Proportionalitätsfaktoren vorgebbar, so dass unter Ausnutzung desselben Drehzahlbereichs des Verbrennungsmotors 74 beispielsweise zum gesteuerten Betrieb des Kältekreises 22 in einem unteren Kälteleistungsbereich ein anderer Proportionalitätsfaktor zwischen dem Generator 76 und dem Verdichtermotor 82 verwendet wird, als zum gesteuerten Betrieb des Kältekreises 22 in einem oberen Kälteleistungsbereich.

## Patentansprüche

1. Kühleinrichtung umfassend eine Kühlzelle (10) und ein Kühlsystem (20), die eine zusammenhängende transportable Kühleinheit bilden, wobei das Kühlsystem einen Kältekreis (22) umfasst, in welchem ein Kältemittelverdichter (24), ein hochdruckseitiger Wärmetauscher (26), eine Expansionseinheit (30) und ein niederdruckseitiger Wärmetauscher (32) angeordnet sind, einen elektrischen Verdichtermotor (82) zum Antreiben des Kältemittelverdichters (24), wobei das Kühlsystem (20) einen Generator (76) zum Einspeisen elektrischer Leistung in ein internes elektrisches Netz (80) des Kühlsystems (20) aufweist, von welchem der Verdichtermotor (82) gespeist ist, wobei ein Verbrennungsmotor (74) zum Antreiben des Generators (76) vorgesehen ist, der mit dem Generator (76) eine zusammenhängende Motor-Generatoreinheit (70) bildet und eine Steuereinheit (110) zur Steuerung einer Kälteleistung des Kältekreises (22),
**dadurch gekennzeichnet, dass** mit der Steuereinheit (110) durch stufenlose Steuerung der Drehzahl des Verbrennungsmotors (74) die Kälteleistung im Wesentlichen stufenlos steuerbar ist, und dass die Steuereinheit (110) über einen Motorregler (116) die Drehzahl des Verbrennungsmotors (74) so steuert, dass der Verbrennungsmotor (74) nur mit der Drehzahl betrieben wird, die erforderlich ist, um die erforderliche elektrische Leistung für den Betrieb des Kühlsystems (20) in das interne elektrische Netz (80) einzuspeisen.

2. Kühleinrichtung nach Anspruch 1, **dadurch gekennzeichnet, dass** der Generator (76) ein Drehstromgenerator ist.

3. Kühleinrichtung nach einem der voranstehenden Ansprüche, **dadurch gekennzeichnet, dass** das interne elektrische Netz (80) ein Drehstromnetz ist.

4. Kühleinrichtung nach einem der voranstehenden Ansprüche, **dadurch gekennzeichnet, dass** der Verdichtermotor (82) ein Drehstrommotor ist.

5. Kühleinrichtung nach einem der voranstehenden Ansprüche, **dadurch gekennzeichnet, dass** der Generator (76) und der Verdichtermotor (82) zumindest innerhalb eines Kälteleistungsbereichs drehzahlproportional zueinander betreibbar sind.

6. Kühleinrichtung nach Anspruch 5, **dadurch gekennzeichnet, dass** der Generator (76) und der Verdichtermotor (82) zumindest innerhalb des Kälteleistungsbereichs miteinander frequenzproportional gekoppelt betreibbar sind.

7. Kühleinrichtung nach Anspruch 6, **dadurch gekennzeichnet, dass** der Generator (76) und der Verdichtermotor (82) mit im Wesentlichen derselben Frequenz laufen.

8. Kühleinrichtung nach Anspruch 6 oder 7, **dadurch gekennzeichnet, dass** der Generator (76) ein mehrpoliger Generator ist und dass der Verdichtermotor (82) eine der Frequenzproportionalität entsprechende Polzahl aufweist.

9. Kühleinrichtung nach einem der voranstehenden Ansprüche, **dadurch gekennzeichnet, dass** die Steuereinheit (110) zumindest innerhalb eines Kälteleistungsbereichs zur Steuerung der Kälteleistung des Kältekreises (22) die Drehzahl des Verbrennungsmotors (74) steuert.

10. Kühleinrichtung nach einem der voranstehenden Ansprüche, **dadurch gekennzeichnet, dass** das Kühlsystem (20) eine dem hochdruckseitigen Wärmetauscher (26) zugeordnete Gebläseeinheit (60) aufweist, und dass die Gebläseeinheit (60) von dem internen elektrischen Netz (80) gespeist ist.

11. Kühleinrichtung nach Anspruch 10, **dadurch gekennzeichnet, dass** die Gebläseeinheit (60) über eine Umsetzereinheit (86) von dem internen elektrischen Netz (80) gespeist ist.

12. Kühleinrichtung nach einem der voranstehenden Ansprüche, **dadurch gekennzeichnet, dass** das Kühlsystem (20) eine dem niederdruckseitigen Wärmetauscher (32) zugeordnete Gebläseeinheit (40) aufweist und dass die Gebläseeinheit (40) von dem internen elektrischen Netz (80) gespeist ist.

13. Kühleinrichtung nach Anspruch 12, **dadurch gekennzeichnet, dass** die Gebläseeinheit (40) über eine Umsetzereinheit (86) von dem internen elektrischen Netz (80) gespeist ist.

14. Kühleinrichtung nach einem der voranstehenden Ansprüche, **dadurch gekennzeichnet, dass** das interne elektrische Netz (80) mit einer Einspeiseeinheit (100) zur Zufuhr von elektrischer Leistung aus einem externen Versorgungsnetz (102) versehen ist.

15. Kühleinrichtung nach Anspruch 14, **dadurch gekennzeichnet, dass** die Einspeiseeinheit (100) die Frequenz des externen Versorgungsnetzes (102) auf eine vorgebbare Frequenz des internen elektrischen Netzes (80) umsetzt.

16. Kühleinrichtung nach einem der voranstehenden Ansprüche, **dadurch gekennzeichnet, dass** der Verdichtermotor (82) und der Kältemittelverdichter (24) direkt mechanisch starr gekoppelt sind.

17. Kühleinrichtung nach einem der voranstehenden Ansprüche, **dadurch gekennzeichnet, dass** der Verdichtermotor (82) und der Kältemittelverdichter (24) in einem gemeinsamen, hermetisch geschlossenen Gehäuse (92) angeordnet sind.

18. Kühleinrichtung nach einem der voranstehenden Ansprüche; **dadurch gekennzeichnet, dass** der Verbrennungsmotor (74) und der Generator (76) direkt mechanisch starr gekoppelt sind.

19. Kühleinrichtung nach einem der voranstehenden Ansprüche, **dadurch gekennzeichnet, dass** der Verbrennungsmotor (74) und der Generator (76) eine zusammenhängende Gehäuseeinheit (78) aufweisen.

## Claims

1. Cooling equipment comprising
a cooling cell (10) and a cooling system (20), which form a unitary transportable cooling unit, the cooling system comprising a refrigeration circuit (22), in which a refrigerant compressor (24), a high-pressure side heat exchanger (26), an expansion unit (30) and a low-pressure side heat exchanger (32) are disposed,
an electric compressor motor (82) for driving the refrigerant compressor (24), the cooling system (20) having a generator (76) for feeding electric power into an internal electrical supply system (80) of the cooling system (20), from which the compressor motor (82) is fed, an internal combustion engine (74) being provided for driving the generator (76), which, together with the generator (76), forms a unitary motor-generator unit (70),
and a control unit (110) for controlling a refrigerating output of the refrigeration circuit (22),
**characterized in that** the refrigerating output can be controlled substantially steplessly by means of the control unit (110) by stepless control of the rotational speed of the internal combustion engine (74),
and **in that** the control unit (110) controls the rotational speed of the internal combustion engine (74) by means of an engine controller (116) so that the internal combustion engine (74) is only operated at the speed which is necessary in order to feed into the internal electrical supply system (80), the required electric power for the operation of the cooling system (20).

2. Cooling equipment according to Claim 1, **characterized in that** the generator (76) is a three-phase generator.

3. Cooling equipment according to either of the preceding claims, **characterized in that** the internal electrical supply system (80) is a three-phase system.

4. Cooling equipment according to any of the preceding claims, **characterized in that** the compressor motor (82) is a three-phase motor.

5. Cooling equipment according to any of the preceding claims, **characterized in that** the generator (76) and the compressor motor (82) can be operated in a speed-proportional manner in relation to one another, at least within a refrigerating output range.

6. Cooling equipment according to Claim 5, **characterized in that** the generator (76) and the compressor motor (82) can be operated such that they are coupled together in a frequency-proportional manner, at least within the refrigerating output range.

7. Cooling equipment according to Claim 6, **characterized in that** the generator (76) and the compressor motor (82) run at substantially the same frequency.

8. Cooling equipment according to Claim 6 or 7, **characterized in that** the generator (76) is a multi-pole generator and **in that** the compressor motor (82) has a number of poles corresponding to the frequency proportionality.

9. Cooling equipment according to any of the preceding claims, **characterized in that** the control unit (110) controls the speed of the internal combustion engine (74) at least within a refrigerating output range for controlling the refrigerating output of the refrigeration circuit (22).

10. Cooling equipment according to any of the preceding claims, **characterized in that** the cooling system (20) has a blower unit (60) associated with the high-pressure side heat exchanger (26), and **in that** the blower unit (60) is fed from the internal electrical supply system (80).

11. Cooling equipment according to Claim 10, **characterized in that** the blower unit (60) is fed from the internal electrical supply system (80) via a converter unit (86).

12. Cooling equipment according to any of the preceding claims, **characterized in that** the cooling system (20) has a blower unit (40) associated with the low-pressure side heat exchanger (32) and **in that** the blower unit (40) is fed from the internal electrical supply system (80).

13. Cooling equipment according to Claim 12, **characterized in that** the blower unit (40) is fed from the internal electrical supply system (80) via a converter unit (86).

14. Cooling equipment according to any of the preceding claims, **characterized in that** the internal electrical supply system (80) is provided with an in-feed unit (100) for supplying electric power from an external supply system (102).

15. Cooling equipment according to Claim 14, **characterized in that** the in-feed unit (100) converts the frequency of the external supply system (102) to a predeterminable frequency of the internal electrical supply system (80).

16. Cooling equipment according to any of the preceding claims, **characterized in that** the compressor motor (82) and the refrigerant compressor (24) are directly coupled in a mechanically rigid manner.

17. Cooling equipment according to any of the preceding claims, **characterized in that** the compressor motor (82) and the refrigerant compressor (24) are disposed in a common, hermetically-sealed housing (92).

18. Cooling equipment according to any of the preceding claims, **characterized in that** the internal combustion engine (74) and the generator (76) are directly coupled in a mechanically rigid manner.

19. Cooling equipment according to any of the preceding claims, **characterized in that** the internal combustion engine (74) and the generator (76) have a unitary housing unit (78).

## Revendications

1. Dispositif de refroidissement comprenant une cellule de refroidissement (10) et un système de refroidissement (20) qui forment une unité de refroidissement transportable et connexe, dans lequel le système de refroidissement comprend un circuit frigorifique (22) dans lequel sont agencés un compresseur de fluide frigorifique (24), un échangeur thermique côté haute pression (26), une unité d'expansion (30) et un échangeur thermique côté basse pression (32), un moteur de compresseur (82) électrique pour entraîner le compresseur de fluide frigorifique (24), dans lequel le système de refroidissement (20) comprend un générateur (76) pour alimenter avec une puissance électrique un réseau électrique interne (80) du système de refroidissement (20) par lequel le moteur de compresseur (82) est alimenté, dans lequel un moteur à combustion (74) est prévu pour entraîner le générateur (76), lequel moteur à combustion forme avec le générateur (76) une unité moteur-générateur (70) connexe, et une unité de commande (110) pour commander une puissance frigorifique du circuit frigorifique (22),
**caractérisé en ce qu'**avec l'unité de commande (110) la puissance frigorifique peut être commandée essentiellement en continu par une commande en continu du nombre de tours du moteur à combustion (74), et **en ce que** l'unité de commande (110) commande le nombre de tours du moteur à combustion (74) via un régulateur de moteur (116) de telle sorte que le moteur à combustion (74) soit uniquement entraîné avec le nombre de tours requis pour alimenter le réseau électrique interne avec la puissance électrique (80) requise pour l'entraînement du système de refroidissement (20).

2. Dispositif de refroidissement selon la revendication 1, **caractérisé en ce que** le générateur (76) est un générateur triphasé.

3. Dispositif de refroidissement selon l'une des revendications précédentes, **caractérisé en ce que** le réseau électrique interne (80) est un réseau triphasé.

4. Dispositif de refroidissement selon l'une des revendications précédentes, **caractérisé en ce que** le moteur de compresseur (82) est un moteur triphasé.

5. Dispositif de refroidissement selon l'une des revendications précédentes, **caractérisé en ce que** le générateur (76) et le moteur de compresseur (82) peuvent être entraînés l'un par rapport à l'autre proportionnellement au nombre de tours au moins à l'intérieur d'une région de puissance frigorifique.

6. Dispositif de refroidissement selon la revendication 5, **caractérisé en ce que** le générateur (76) et le moteur de compresseur (82) peuvent être entraînés couplés l'un à l'autre proportionnellement à la fréquence au moins à l'intérieur de la région de puissance frigorifique.

7. Dispositif de refroidissement selon la revendication 6, **caractérisé en ce que** le générateur (76) et le moteur de compresseur (82) fonctionnent avec essentiellement la même fréquence.

8. Dispositif de refroidissement selon la revendication 6 ou 7, **caractérisé en ce que** le générateur (76) est un générateur multipolaire et **en ce que** le moteur de compresseur (82) présente un nombre de pôles correspondant à la proportionnalité de fréquence.

9. Dispositif de refroidissement selon l'une des revendications précédentes, **caractérisé en ce que** l'unité de commande (110) commande le nombre de tours du moteur à combustion (74) pour commander la puissance frigorifique du circuit frigorifique (22) au moins à l'intérieur d'une région de puissance frigorifique.

10. Dispositif de refroidissement selon l'une des revendications précédentes, **caractérisé en ce que** le système de refroidissement (20) présente une unité de soufflerie (60) affectée à l'échangeur thermique côté haute pression (26), et **en ce que** l'unité de soufflerie (60) est alimentée par le réseau électrique interne (80).

11. Dispositif de refroidissement selon la revendication 10, **caractérisé en ce que** l'unité de soufflerie (60) est alimentée par le réseau électrique interne (80) via une unité de convertisseur (86).

12. Dispositif de refroidissement selon l'une des revendications précédentes, **caractérisé en ce que** le système de refroidissement (20) présente une unité de soufflerie (40) affectée à l'échangeur thermique côté basse pression (32) et **en ce que** l'unité de soufflerie (40) est alimentée par le réseau électrique interne (80).

13. Dispositif de refroidissement selon la revendication 12, **caractérisé en ce que** l'unité de soufflerie (40) est alimentée par le réseau électrique interne (80) via une unité de convertisseur (86).

14. Dispositif de refroidissement selon l'une des revendications précédentes, **caractérisé en ce que** le réseau électrique interne (80) est doté d'une unité d'alimentation (100) pour acheminer une puissance électrique depuis un réseau d'approvisionnement (102) externe.

15. Dispositif de refroidissement selon la revendication 14, **caractérisé en ce que** l'unité d'alimentation (100) convertit la fréquence du réseau d'approvisionnement (102) externe en une fréquence pouvant être prédéfinie du réseau électrique interne (80).

16. Dispositif de refroidissement selon l'une des revendications précédentes, **caractérisé en ce que** le moteur de compresseur (82) et le compresseur de fluide frigorifique (24) sont rigidement couplés directement mécaniquement.

17. Dispositif de refroidissement selon l'une des revendications précédentes, **caractérisé en ce que** le moteur de compresseur (82) et le compresseur de fluide frigorifique (24) sont agencés dans un logement (92) commun hermétiquement fermé.

18. Dispositif de refroidissement selon l'une des revendications précédentes, **caractérisé en ce que** le moteur à combustion (74) et le générateur (76) sont rigidement couplés directement mécaniquement.

19. Dispositif de refroidissement selon l'une des revendications précédentes, **caractérisé en ce que** le moteur à combustion (74) et le générateur (76) présentent une unité de logement (78) connexe.
